# EUROPÄISCHE PATENTSCHRIFT

(11) **EP 3 228 563 B1**
(45) Veröffentlichungstag und Bekanntmachung des Hinweises auf die Patenterteilung: **12.06.2019**
(21) Anmeldenummer: 16164264.0
(22) Anmeldetag: 07.04.2016
(51) Int. Cl.: B65G 17/46, B65G 15/58, B65G 47/52

(54) **FÖRDERSYSTEM MIT ANSTEUERBAREM ELEKTROADHÄSIONSMITTEL**
CONVEYING SYSTEM HAVING A CONTROLLABLE MEANS OF ELECTRO ADHESION
SYSTEME D'ALIMENTATION COMPRENANT UN MOYEN D'ADHERENCE ELECTRIQUE POUVANT ETRE COMMANDE

(43) Veröffentlichungstag der Anmeldung: 11.10.2017
(73) Patentinhaber: Siemens Aktiengesellschaft, 80333 München (DE)
(72) Erfinder: VITALINI, Dr. Michele, 90475 Nürnberg (DE)
(74) Vertreter: Maier, Daniel Oliver

(56) Entgegenhaltungen:
- US-A1- 2013 292 303
- US-A1- 2013 294 875
- US-A1- 2015 368 049

## Beschreibung

Die Erfindung bezieht sich auf das technische Gebiet der Fördersysteme für Stückgüter, beispielsweise für Pakete und Gepäckstücke.

Ein Transport von Stückgütern auf Fördersystemen umfasst häufig mit Richtungswechseln verbundene Überführungen der Stückgüter von einer ersten Förderstrecke seitlich auf eine zweite Förderstrecke. Meist verändern die Stückgüter hierbei unerwünscht aufgrund ihrer nicht punktförmigen Auflage auf der Förderstrecke ihre Ausrichtungen. Dies kann Störungen im Materialfluss hervorrufen, insbesondere können ein oder mehrere Stückgüter ineinander und/ oder mit dem Fördersystem verkanten, was zu Beschädigungen von Stückgut und Fördersystem und somit Laufzeitstörungen führen kann. In Postentwertungssystemen, welche an definierter Stelle eine Druckaufgabe auf die Postsendung aufbringen sollen, aber auch bei Fördersystemen, auf denen ein Stückgut basierend auf einem an einer Stelle des Stückgutes aufgebrachten Sortierkriteriums an vielen Stellen entlang des Fördersystems wiederholt ausgelesen werden muss, ist eine genaue Positionierung und Ausrichtung für eine korrekte und somit zeitsparende Aufbringung bzw. Auslesung essentiell. In Paketsortieranlagen mit Crossbelt-Sortern kann eine Abweichung der Ausrichtung zu fehlerhaften Funktionen bei der Einschleusung (Konturfehler) und/ oder auf dem Crossbelt-Sorter selber (Doppel-Carrier Belegung oder Beladung zwischen zwei Wagen) führen. Um einen hohen Durchsatz des Fördersystems zu erzielen, ist eine schnelle Fördergeschwindigkeit der einzelnen Förderstrecken notwendig. Auch eine kontinuierliche Förderung von jedem Stückgut ist für einen hohen Durchsatz vorteilhaft.

Bei der kontinuierlichen Förderung tritt jedoch bei einer Überführung eine starke Ausrichtungsveränderung um etliche Grad in Laufrichtung der zweiten Förderstrecke auf, wobei die Ausrichtungsveränderung im Allgemeinen mit steigender Fördergeschwindigkeit steigt. Eine kontinuierliche Förderung ohne oder mit nur sehr geringer Ausrichtungsveränderung erfordert spezielle Fördermittel und ist nur bei geringen Geschwindigkeiten durchführbar.

Die Firma Grabit Inc. produziert Förderbänder und Greifarme welche mit einem Elektroadhäsionsmittel eine Elektroadhäsion zwischen einem Stückgut und dem Förderband bzw. dem Greifarm erzeugt, wobei das Elektroadhäsionsmittel ein- und ausschaltbar ist. WO2015/142754A1 beschreibt Fördersysteme mit einem kontrollierten Abbremsen von Stückgütern auf Förderstrecken mit elektroadhäsiven Oberflächen, wobei die Oberflächen mit einem Elektroadhäsionsmittel ansteuerbar sind. Die Ausführungsbeispiele der Förderstrecken sind jedoch stets schiefe Ebenen und die Problematik eines Auftretens von Ausrichtungsänderungen bei Richtungsänderungen wird nicht behandelt. Ebenfalls Stand der Technik ist ein Ein- und Ausschalten der Elektroadhäsion einzelner Förderstrecken eines Fördersystems nach und/ oder zur Überführung eines Stückgutes von einer übergebenden Förderstrecke auf eine übernehmende Förderstrecke. Wenn die übergebende Förderstrecke eine Querneigung aufweist, kann das Überführen auf eine übernehmende Förderstrecke durch Ausschalten von Elektroadhäsion der übergebenden Förderstrecke eingeleitet werden. Um bei seitwärts ineinander mündenden Förderstrecken ein vollständiges Überführen und einen Transport bergauf auf der übergebenden Förderstrecke zu erreichen, wird die Elektroadhäsion der übergebenden Förderstrecke erst nach vollständiger Überführung und Abbremsung des Gutes eingeschaltet. Das Stückgut wird in diesem Fall jedoch hinsichtlich seiner Ausrichtung unkontrolliert auf die übernehmende Förderstrecke überführt; eine allfällige Ausrichtung erfolgt einzig mithilfe einer Ausrichtungsvorrichtung, beispielsweise eine lineare Begrenzung, welche als Bremsvorrichtung eine Bewegung des Stückgutes in Fallrichtung verhindert und das Stückgut dabei gleichzeitig ausrichtet. Während das Stückgut an der Bremsvorrichtung anliegt, gleitet das Fördermittel der übernehmenden Förderstrecke unter dem Stückgut hindurch.

DE102010035126A1 offenbart ein Fördersystem nach dem Oberbegriff des Anspruchs 1.

DE102010035126A1 offenbart ein Verfahren zum Überführen von einem Stückgut von einer übergebenden Förderstrecke auf eine übernehmende Förderstrecke eines Fördersystems, wobei die übergebende Förderstrecke seitwärts in die übernehmende Förderstrecke mündet; umfassend die Verfahrensschritte:
- das Stückgut wird auf der übergebenden Förderstrecke transportiert;
- das Stückgut wird von der übergebenden Förderstrecke auf die übernehmende Förderstrecke überführt; und
- das Stückgut durch Steuerung der übernehmende Förderstrecke von der übergebenden Förderstrecke auf die übernehmende Förderstrecke im Wesentlichen ohne Veränderung seiner Ausrichtung überführt wird.

Der vorliegenden Erfindung liegt daher die Aufgabe zugrunde, ein verbessertes Fördersystem zu ermöglichen, auf welchem ein Stückgut von einer übergebenden Förderstrecke auf eine übernehmende Förderstrecke im Wesentlichen ohne Veränderung einer Ausrichtung des Stückgutes bei gleichzeitig hohem Durchsatz des Fördersystems überführbar ist. Diese Aufgabe wird durch die in den unabhängigen Ansprüchen beschriebenen Lösungen gelöst.

Die erfindungsgemäße Lösung sieht ein Fördersystem für ein Stückgut gemäss den in Patentanspruch 1 angegebenen Merkmalen vor.

Damit das Stückgut stets auf der Förderstrecke aufliegt und dadurch kontrolliert transportierbar ist, können die übergebende Förderstrecke und die übernehmende Förderstrecke so angeordnet sein, dass das Stückgut stetig und/ oder gleitend von der übergebenden Förderstrecke auf die übernehmende Förderstrecke überführbar ist. Mit dieser Anordnung reicht einzig eine Ansteuerung des Elektroadhäsionsmittels aus, um die Ausrichtung des Stückgutes nicht zu verändern, weitere Ausrichtungsmittel sind nicht erforderlich. Eine gleitende Überführung des Stückgutes bedeutet hierbei insbesondere, dass das das Stückgut bei der Überführung keinen großen Höhenunterschied fallend überwindet und im Wesentlichen kontinuierlich befördert wird, also nicht auf einer Position verharrt. Ebenfalls soll auch kein verharrendes Gleiten auftreten, also ein Gleiten des Stückgutes auf der übergebenden und/ oder übernehmenden Förderstrecke ohne oder mit nur sehr wenig Bewegung entlang der übergebenden und/ oder übernehmenden Förderstrecken. Wenig Bewegung soll als eine Geschwindigkeit des Stückgutes definiert werden, die sehr viel langsamer als eine eigene Fördergeschwindigkeiten der Förderstrecken ist, wobei die Fördergeschwindigkeiten beispielsweise durch ein Fördermittel vorgegeben ist.

Um während des Überführens eine Rotation des Stückgutes zu verhindern, insbesondere während das Stückgut zugleich auf der übergebenden Förderstrecke und auf der übernehmenden Förderstrecke aufliegt, kann die Steuereinrichtung adaptiert sein, das Elektroadhäsionsmittel so anzusteuern, dass die Elektroadhäsion der übernehmenden Förderstrecke ausgeschaltet ist, während das Stückgut von der übergebenden Förderstrecke auf die übernehmende Förderstrecke überführt wird. Bei einem Richtungswechsel zwischen der übergebenden Förderstrecke und der übernehmenden Förderstrecke, eingeschalteter Elektroadhäsion der übernehmenden Förderstrecke während des Überführens und/ oder starker Haftung zwischen Stückgut und übergebender Förderstrecke und würde eine Rotation des Stückgutes aufgrund seiner flächigen Auflage auf beiden Förderstrecken auftreten.

Um das Stückgut plötzlich und gleichmäßig rasch mit dem Ziel abzubremsen, dass keine Ausrichtungsveränderung erfolgt, kann die Steuereinrichtung adaptiert sein, das Elektroadhäsionsmittel so anzusteuern, dass die Elektroadhäsion der übernehmenden Förderstrecke eingeschaltet wird, nachdem das Stückgut hinreichend und/ oder vollständig auf die übernehmende Förderstrecke überführt wurde. Nach einem hinreichenden Überführen liegt das Stückgut gar nicht mehr oder nur noch so wenig auf der übergebenden Förderstrecke auf, dass die Haftung und/ oder Wechselwirkung zwischen Stückgut und übergebender Förderstrecke sehr viel geringer als zwischen Stückgut und übernehmender Förderstrecke bei eingeschaltetem Elektroadhäsionsmittel ist und nicht für eine wesentliche Ausrichtungsveränderung ausreicht.

Um bei mit einer Querneigung zur Förderrichtung angeordneter übergebender Förderstrecke ein besonders einfaches Überführen des Stückgutes von der übergebenden auf die übernehmenden Förderstrecke mittels Schwerkraftförderung zu ermöglichen, kann die Steuereinrichtung adaptiert sein, das Elektroadhäsionsmittel so anzusteuern, dass die Elektroadhäsion der übergebenden Förderstrecke ausgeschaltet wird, um das Stückgut auf die übernehmende Förderstrecke zu übergeben. So wird das Stückgut auf besonders einfache Weise auf die übernehmende Förderstrecke überführt, denn nach dem Ausschalten des Elektroadhäsionsmittels der übergebenden Förderstrecke reicht die Haftung zwischen Stückgut und übergebender Förderstrecke nicht mehr aus, um bei der gegebenen Querneigung eine Bewegung des Stückgutes in Fallrichtung zu verhindern.

Um das Elektroadhäsionsmittel gezielt in dem Bereich einschalten zu können, in dem das Stückgut auf dem Förderstrecke aufliegt, kann die übergebende Förderstrecke und/ oder die übernehmende Förderstrecke in mehrere Fördersegmente unterteilt sein und die Steuereinrichtung adaptiert sein, das Elektroadhäsionsmittel so anzusteuern, dass die Elektroadhäsion einzelner Fördersegmente individuell an- und ausgeschaltet wird. Insbesondere wenn einzelne Fördersegmente der übernehmenden Förderstrecke gleichzeitig ein- und/ oder ausgeschaltet sind, kann der Durchsatz erhöht werden, da so ein bereits überführtes Stückgut auf der übernehmenden Förderstrecke auf einem Fördersegment mit gerade eingeschalteter Elektroadhäsion transportiert werden kann, während ein weiteres Stückgut gleichzeitig bei ausgeschalteter Elektroadhäsion des betreffenden Fördersegmentes überführt wird.

Gemäß einer bevorzugten Ausführungsform kann das Fördersystem als Detektor eine Lichtschranke, umfassen, welche eingerichtet sein kann, eine Position des Stückguts an die Steuereinrichtung zu übermitteln. Optional kann mit dem mindestens einen Detektor auch noch die Ausrichtung des Stückgutes detektierbar sein.

Damit das Stückgut auf dem Fördersystem aktiv transportierbar ist, kann das Fördersystem mindestens ein Fördermittel, beispielsweise ein Förderband, umfassen, auf dem das Stückgut aufliegend transportierbar ist. Ohne Gefälle und/ oder Querneigung in zumindest Teilbereichen des Fördersystems ist ein aktiver Transport des Stückguts zwingend.

Hinsichtlich eines Verfahrens wird die vorstehend genannte Aufgabe erfindungsgemäß gelöst durch die im Patentanspruch 8 angegebenen Verfahrensschritte.

Um eine Veränderung der Ausrichtung des Stückgutes beim Überführen von der übergebenden auf die übernehmende Förderstrecke noch besser zu verhindern, kann das Elektroadhäsionsmittel so angesteuert werden, dass die Elektroadhäsion der übernehmenden Förderstrecke ausgeschaltet ist, bevor und/ oder während das Stückgut von der übergebenden Förderstrecke auf die übernehmende Förderstrecke überführt wird. Da bei ausgeschalteter Elektroadhäsion die Haftung zwischen übernehmenden Förderstrecke und Stückgut sehr gering ist, reicht diese Haftung auch nicht für eine starke Veränderung der Ausrichtung durch ein Verziehen aufgrund der unterschiedlichen Förderrichtungen der Förderstrecken aus.

Um ein zu frühes Einschalten der Elektroadhäsion der übernehmenden Förderstrecke zu verhindern, kann das Elektroadhäsionsmittel so angesteuert werden, dass die Elektroadhäsion der übernehmenden Förderstrecke eingeschaltet wird, nachdem das Stückgut hinreichend und/ oder vollständig auf die übernehmende Förderstrecke überführt wurde.

Gemäß einer weiteren vorteilhaften Ausführungsform kann der Verfahrensschritt eines Ausschaltens der Elektroadhäsion der übergebenden Förderstrecke erfolgen, bevor das Stückgut von der übergebenden Förderstrecke auf die übernehmende Förderstrecke überführt wird. So wird die Haftung zwischen Stückgut und übergebender Förderstrecke sehr rasch verändert, wodurch beispielsweise bei geneigter übergebender Förderstecke ein Überführen allein durch das Ausschalten der Elektroadhäsion erfolgen kann.

Um gleichzeitig zwei oder mehr Stückgüter auf einer Förderstrecke zu transportieren und somit die Kapazität des Fördersystems zu erhöhen, kann die übergebende Förderstrecke und/ oder die übernehmende Förderstrecke in mehrere Fördersegmente unterteilt sein und die Elektroadhäsion einzelner Fördersegmente individuell ein- und ausgeschaltet werden.

Um das Fördersystem angepasst auf die jeweiligen Stückgüter und die jeweilige Ausgestaltung der Förderstrecke zu betreiben, kann die Elektroadhäsion der übergebenden Förderstrecke und/ oder der übernehmenden Förderstrecke basierend auf einer detektierten Position des Stückgutes auf dem Fördersystem ein- und/ oder ausgeschaltet werden.

Bevorzugte Ausführungsformen der Erfindung werden nachfolgend anhand der Figuren beispielsweise näher erläutert. Dabei zeigen:
- Figur 1: eine Aufsicht auf einen Ausschnitt eines Fördersystems; und
- Figur 2: der Ausschnitt des Fördersystems von Figur 1 mit ein- und ausgeschalteter Elektroadhäsion in verschiedenen Fördersegmenten; und
- Figur 3: eine Aufsicht auf einen weiteren Bereich des Fördersystem, wobei drei übergebende Förderstrecken in dieselbe übernehmende Förderstrecke münden; und
- Figur 4: ein weiteres Fördersystem, welches nicht Teil der Erfindung ist, mit quergeneigter übergebender Förderstrecke und drei übernehmenden Förderstrecken.

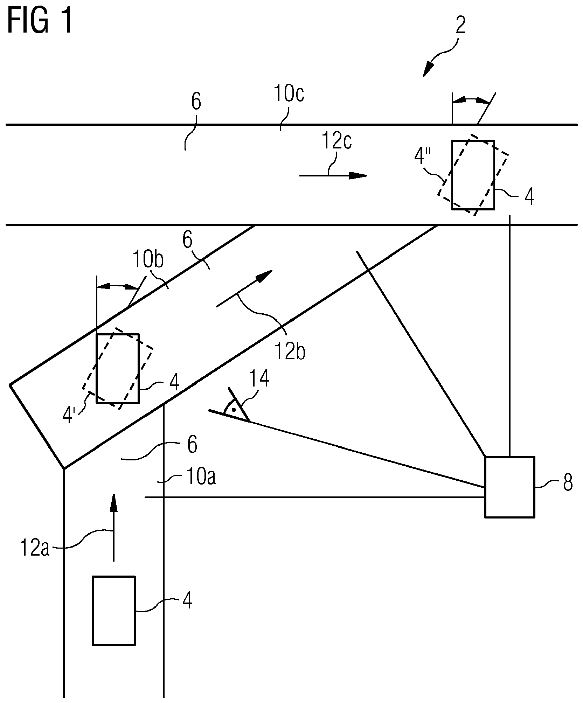

Figur 1 zeigt eine Aufsicht auf einen Ausschnitt eines Fördersystems 2 für Stückgüter 4 gemäß einer bevorzugten Ausführungsform der Erfindung. Das Fördersystem 2 umfasst ein ansteuerbares Elektroadhäsionsmittel 6, eine Steuereinrichtung 8 und Förderstrecken 10a, 10b, 10c, wobei die Stückgüter 4 auf den Förderstrecken 10a, 10b, 10c aufliegend transportierbar sind. Wenn im Folgenden ein Sachverhalt auf alle gleichartigen Objekte zutrifft, bezeichnen Bezugszeichen ohne alphabetische Indices stets generisch auch allgemein alle jeweiligen Objekte. Die übergebende Förderstrecke 10a mündet seitwärts in die übernehmende Förderstrecke 10b und das Fördersystem 2 ist ausgestaltet, ein Stückgut 4 von der übergebenden Förderstrecke 10a auf die übernehmende Förderstrecke 10b zu überführen, so dass das Stückgut 4 beim Überführen einen Richtungswechsel erfährt. An die übernehmende Förderstrecke 10b schließt wiederum seitwärts eine weitere Förderstrecke 10c an. Die Förderstrecken 10a, 10b, 10c sind gleichartig ausgestaltet und weisen jeweils eigene Förderrichtungen 12a, 12b, 12c auf, entlang derer die Stückgüter 4 transportierbar sind. Das Fördersystem 2 umfasst Fördermittel auf denen die Stückgüter 4 aufliegend aktiv entlang der Förderrichtungen 12 transportierbar sind. Die Fördermittel können Förderbänder und/ oder Transportrollen sein, die ausgestaltet sind, entlang ihrer Förderrichtungen 12 antreibbar und mit der Steuereinrichtung 8 ansteuerbar zu sein.

Das Elektroadhäsionsmittel 6 ist ausgestaltet, mittels Elektroadhäsion eine elektrostatische Aufladung und somit eine anziehende Wechselwirkung, Elektroadhäsion genannt, zwischen den auf den Förderstrecken 10 aufliegenden Stückgütern 4 und den Förderstrecken 10 selber zu erzeugen. Die eingeschaltete Elektroadhäsion bewirkt also eine Erhöhung der Haftung zwischen Stückgut 4 und Förderstrecke 10 bei sehr geringem Energieverbrauch. Bei ausgeschalteter Elektroadhäsion sind Haftung und Bremswirkung zwischen Stückgut 4 und übergebender Förderstrecke 10a und/ oder übernehmender Förderstrecke 10b und/ oder weiterer Förderstrecke 10c sehr viel geringer als bei eingeschalteter Elektroadhäsion. So ist mit dem Elektroadhäsionsmittels 6 eine Haftung der auf den Förderstrecken 10 aufliegenden Stückgüter 4 variierbar. Um eine besonders große Variation zu erzielen, weisen die Förderstrecken 10 eine ganz oder zumindest teilweise glatte Oberfläche auf.

Bei ausgeschalteter Elektroadhäsion wirkt durch die geringe Haftung auf ein sich bewegendes Stückgut 4 keine oder nur eine sehr geringfügige Abbremsung der Bewegung, so dass das Stückgut 4 nach dem Überführen auf den Förderstrecken 10b, 10c weiter entlang seiner ursprünglichen Bewegungsrichtung gleitet. Bei ebenen Förderstrecken 10b, 10c, ausgeschalteter Elektroadhäsion und sich bereits bewegenden Stückgütern 4 erfolgt also keine ausreichende Übertragung der Förderrichtungen 12b, 12c auf das jeweilige Stückgut 4 durch die antreibbaren Fördermittel.

Durch Einschalten der Elektroadhäsion erfolgt eine abrupte Abbremsung der Gleitbewegung des Stückgutes 4, so dass das Stückgut 4 nicht mehr gleitet und auf den Förderstrecken 10b, 10c aufliegend in die Förderrichtungen 12b, 12c transportiert wird.

Die Steuereinrichtung 8 ist adaptiert, das Elektroadhäsionsmittel 6 so anzusteuern, dass ein Stückgut 4 von der übergebenden Förderstrecke 10a auf die übernehmende Förderstrecke 10b und später auf die weitere Förderstrecke 10c im Wesentlichen ohne Veränderung seiner Ausrichtung überführt werden kann. Im Wesentlichen bedeutet hierbei, dass keinerlei Veränderung der Ausrichtung auftritt oder aber dass die Veränderung hinreichend klein ist, um einen weiteren Transport auf dem Fördersystem 2 störungsfrei zu ermöglichen. Eine hinreichend kleine Veränderung der Ausrichtung, welche die weitere Verarbeitung des Stückgutes 4 durch das Fördersystem 2 nicht stören würde, fällt also auch unter den Schutzumfang. Hierzu sind die Förderstrecken 10 so angeordnet, dass das Stückgut 4 stetig und/ oder gleitend von der übergebenden Förderstrecke 10a auf die übernehmende Förderstrecke 10b überführbar ist. Eine gleitende Überführung bedeutet insbesondere, dass das Stückgut 4 bei der Überführung keinen großen Höhenunterschied fallend überwindet und darüber hinaus auch, dass das Stückgut 4 stets im Wesentlichen in eine der zwei möglichen Förderrichtungen 12a, 12b der involvierten Förderstrecken 10a, 10b befördert wird.

Zunächst wird das Stückgut 4 auf der übergebenden Förderstrecke 10a transportiert und anschließend im Wesentlichen ohne Veränderung seiner Ausrichtung von der übergebenen Förderstrecke 10a auf die übernehmende Förderstrecke 10b überführt. Beim Überführen bewegt sich das Stückgut bei ebenen Förderstrecken 10a, 10b zunächst entlang der ursprünglichen, übernehmenden Förderrichtung 12a. Nach dem Überführen des Stückgutes 4 und wird das Elektroadhäsionsmittel 6 angesteuert und die Elektroadhäsion der übernehmenden Förderstrecke 10b wird eingeschaltet, so dass ein abrupter Richtungswechsel erfolgt, das Stückgut wird auf der übernehmenden Förderstrecke 10b entlang der übernehmenden Förderrichtung 12b transportiert. Ein Verharren auf einer Position würde den Durchsatz des Fördersystems 2 verringern. Ohne dass weitere Ausrichtungsmittel erforderlich sind, wird also mit der Anordnung der Förderstrecken 10 und der Ansteuerung des Elektroadhäsionsmittels 6 erreicht, dass die Ausrichtung des Stückguts 4 nicht verändert wird.

Das Stückgut 4 könnte sehr leicht seine Ausrichtung verändern, wenn es während und/ oder nach dem Überführen auf dem sich gerade bewegenden Fördermittel der übernehmenden Förderstrecke 10b aufliegen und unkontrolliert gleiten würde, also sich gar nicht oder zumindest deutlich langsamer als die Antriebsgeschwindigkeit des Fördermittels der übernehmenden Förderstrecke 10b in die Förderrichtung 12b bewegen würde.

Wenn die übergebende Förderstrecke 10a und die übernehmende Förderstrecke 10b eine Oberfläche mit starker Haftung zwischen Stückgut 4 auch bei ausgeschaltetem Elektroadhäsionsmittel 6 aufweisen würde, würde das Stückgut 4 nach einem Überführen eine veränderte Ausrichtung aufweisen, so wie das gestrichelt angedeutete Stückgut 4'. Dies da während des Überführens das Stückgut 4 gleichzeitig auf beiden Förderstrecken 10a, 10b aufliegt und durch die Fördermittel zugleich in die übergebende Förderrichtung 12a und in die übernehmende Förderrichtung 12b bewegt wird und so das Stückgut 4 gedreht wird. Bei nur sehr geringer Haftung zwischen Stückgut 4 und übernehmender Förderstrecke 10b und ohne das Elektroadhäsionsmittel 6 würde zwar keine Ausrichtungsveränderung erfolgen, aber die Bewegung des Stückgut 4 entlang der übergebenden Förderrichtung 12a würde nicht genügend abgebremst werden. Das Stückgut 4 würde erst an einer Begrenzung der übernehmenden Förderstrecke 10b abgebremst werden und dabei seine Ausrichtung verändern, ohne Begrenzung könnte es sogar von der übernehmenden Förderstrecke 10b runterfallen. Der Einsatz eines Ausrichtungsmittels auf der übernehmenden Förderstrecke 10b, beispielsweise eines Ablenkblechs, welches nach hinreichend erfolgter Überführung die Stückgüter 4 wieder ausrichtet, würde die Ausrichtung sämtlicher das Ausrichtungsmittel passierender Stückgüter 4 vereinheitlichen. Allerdings ermöglicht diese Lösung kein Beibehalten unterschiedlicher Ausrichtungen der Stückgüter 4, was nachteilig ist für eine Detektion eines bereits ausgerichteten Auslesemerkmals, welches bei unterschiedlichen Stückgütern 4 nicht immer an der gleichen Stelle angeordnet ist.

Das Elektroadhäsionsmittel 6 wird also so angesteuert, dass die Elektroadhäsion der übernehmenden Förderstrecke 10b ausgeschaltet ist, bevor, kurz bevor und/ oder insbesondere während das Stückgut 4 von der übergebenden Förderstrecke 10a auf die übernehmende Förderstrecke 10b überführt wird. Die Steuereinrichtung 8 ist adaptiert, das Elektroadhäsionsmittel 6 derart anzusteuern und stellt sicher, dass die Elektroadhäsion der übernehmenden Förderstrecke 10b ausgeschaltet ist, während sich das Stückgut 4 mit der übergebenden Förderstrecke 10a und der übernehmenden Förderstrecke 10b in direktem Kontakt befindet. Hierdurch kann das Stückgut 4 zunächst ohne starke Abbremsung durch die Oberfläche der übernehmenden Förderstrecke 10b auf ebendiese überführt werden und auf der übernehmenden Förderstrecke 12b zunächst im Wesentlichen entlang der übergebenden Förderrichtung 12a, der ursprünglichen Bewegungsrichtung, gleiten. Da bei ausgeschalteter Elektroadhäsion der übernehmenden Förderstrecke 10b das Stückgut 4 nahezu ungehindert gleiten kann, wird die Bewegung des Stückguts 4 nur sehr geringfügig oder gar nicht durch ein Fördermittel der übernehmenden Förderstrecke 10b beeinflusst und es erfolgt keine oder zumindest keine bedeutende Veränderung der Ausrichtung des Stückgutes 4 durch Verdrehen aufgrund der Überlagerung der Förderrichtungen 12a, 12b. Dies würde hingegen auftreten bei starker Haftung zwischen der übernehmenden Förderstrecke 10b und dem Stückgut 4, also beispielsweise bei eingeschalteter Elektroadhäsion der übernehmenden Förderstrecke 10b. Um zum Überführen die Förderrichtung 12a der übergebenden Förderstrecke 10a gut auf das Stückgut 4 zu übertrage, wird daher das Elektroadhäsionsmittel 6 vorteilhafterweise so angesteuert, dass die Elektroadhäsion der übergebenden Förderstrecke 10a eingeschaltet ist, bevor und während das Stückgut überführt wird.

Das Fördersystem 2 umfasst mindestens einen Detektor 14, der beispielsweise als Lichtschranke oder Lichttaster ausgestaltet sein kann. Der Detektor 14 ist eingerichtet, eine Position und/ oder Ausrichtung des Stückguts 4 an die Steuereinrichtung 8 zu übermitteln. Sobald das Stückgut 4 hinreichend und/ oder vollständig auf die übernehmende Förderstrecke 10b überführt wurde, wird dies vom Detektor 14 detektiert und an die Steuereinrichtung 8 gemeldet und die Elektroadhäsion der übernehmenden Förderstrecke 10a eingeschaltet. Ein hinreichendes Überführen bedeutet, dass sich nur noch ein so kleiner Teil des Stückgutes 4 auf der übergebenden Förderstrecke 10a befindet und daher auch bei bereits eingeschalteter Elektroadhäsion der übernehmenden Förderstrecke 10b keine oder aber nur eine sehr geringe Rotation des Stückgutes 4 erfolgen würde. Vorzugsweise befindet sich aber beim Einschalten der Elektroadhäsion der übernehmenden Förderstrecke 10b das Stückgut 4 bereits vollständig auf der übernehmenden Förderstrecke 10b, wobei eine Positionierung an optimaler Förderposition, beispielsweise mittig, bevorzugt ist. Die Elektroadhäsion der übergebenden Förderstrecke 12a und/ oder der übernehmenden Förderstrecke 10b wird also basierend auf einer detektierten Position des Stückgutes 4 auf dem Fördersystem 2 ein- und/ oder ausgeschaltet.

Die Steuereinrichtung 8 ist adaptiert, das Elektroadhäsionsmittel 6 so anzusteuern, dass die Elektroadhäsion der übernehmenden Förderstrecke 10b eingeschaltet wird, nachdem das Stückgut 4 hinreichend und/ oder vollständig auf die übernehmende Förderstrecke 10b überführt wurde. Durch das Einschalten der Elektroadhäsion der übernehmenden Förderstrecke 10b mit dem ein- und ausschaltbaren Elektroadhäsionsmittel 6 findet eine so rasche und augenblickliche Abbremsung des Stückgutes 4 direkt nach dem Überführen auf, so dass beim Richtungswechsel im Wesentlichen keine Rotation und somit Veränderung der Ausrichtung des Stückgutes 4 erfolgt.

Die Steuereinrichtung 8 ist adaptiert, das Fördermittel der übernehmenden Förderstrecke 10b bereits vor und/ oder während und/ oder nach dem Überführen so anzusteuern, das mit dem Fördermittel das Stückgut entlang der übernehmenden Förderrichtung 12b transportierbar ist. Nach dem Ansteuern des Elektroadhäsionsmittels 6, so dass die Elektroadhäsion der übernehmenden Förderstrecke 10b eingeschaltet wird, kann so das Stückgut 4 also direkt weiter transportiert werden. Zusätzlich zu der Tatsache, dass so eine Veränderung der Ausrichtung verringert wird, kann dank der eingeschalteten Elektroadhäsion das Stückgut 4 mit höheren Geschwindigkeiten transportiert werden, was den Durchsatz des Fördersystems 2 erhöht.

Um eine Veränderung der Ausrichtung des Stückgutes 4 beim Überführen von der übernehmenden Förderstrecke 10b auf die weitere Förderstrecke 10c zu verhindern, erfolgt ein Ein- und Ausschalten der Elektroadhäsion beider Förderstrecken 10b, 10c auf die gleiche Weise wie bei der übergebenden Förderstrecke 10a und der übernehmenden Förderstrecke 10b.

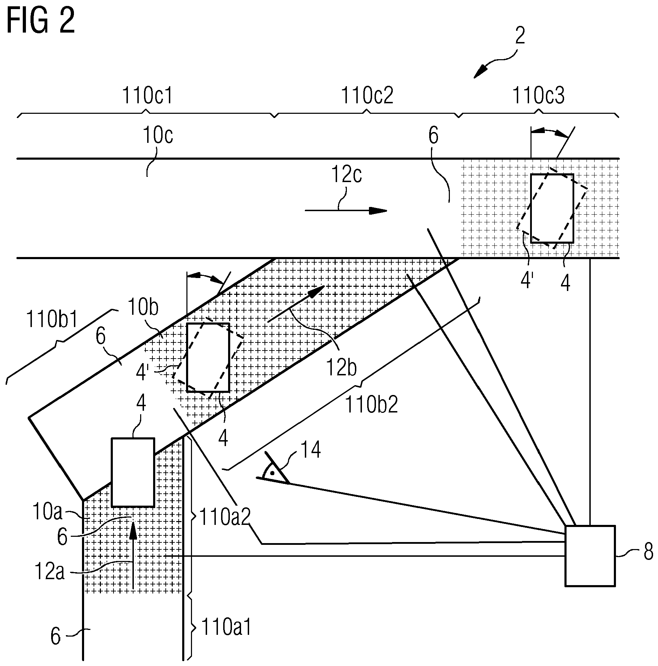

Figur 2 zeigt gemäß einer bevorzugten Ausführungsform der Erfindung den bereits in Figur 1 gezeigten Ausschnitt des Fördersystems 2. Die übergebende Förderstrecke 10a, die übernehmende Förderstrecke 10b und die weitere Förderstrecke 10c sind in Fördersegmente 110a1, 110a2, 110b1, 110b2, 110c1, 110c2, 110c3 unterteilt und die Steuereinrichtung 8 ist adaptiert, das Elektroadhäsionsmittel 6 so anzusteuern, dass die Elektroadhäsion der einzelnen Fördersegmente 110 individuell ein- und ausgeschaltet wird. Die Elektroadhäsion der Fördersegmente 110a2, 110b2, 110c3 ist eingeschaltet, die Elektroadhäsion der Fördersegmente 110a1, 110b1, 110c1, 110c2 ist ausgeschaltet. Das Stückgut 4 wird gerade vom Fördersegment 110a2 der übergebenden Förderstrecke 10a mit eingeschalteter Elektroadhäsion auf das Fördersegment 110b1 der übernehmenden Förderstrecke 10b mit ausgeschalteter Elektroadhäsion überführt. Ohne ausgeschaltete Elektroadhäsion des Fördersegmentes 110b1 der übernehmenden Förderstrecke 10b würde das Stückgut 4 nach einem Weitertransport eine veränderte Ausrichtung aufweisen und wie das gestrichelt angedeutete Stückgut 4' auf der übernehmenden Förderstrecke 10b aufliegen. Durch die Aufteilung der Förderstrecken 10 in Fördersegmente 110 kann eine Förderstrecke 10 gleichzeitig mehr als ein Stückgut 4 transportieren. Darüber hinaus kann so zusätzlich zu dem Stückgut 4, welches gerade überführt wird, noch ein weiteres Stückgut 4 auf der übernehmenden Förderstrecke 10b auf dem Fördersegment 110b2 transportiert werden. Die Elektroadhäsion des Fördersegmentes 110b1 wird erst nach vollständiger Überführung des Stückgutes 4 eingeschaltet. Ohne eine Aufteilung der übernehmenden Förderstrecke 10b in die Fördersegmente 110b1, 110b2 müsste für das Überführen des Stückgutes 4 die Elektroadhäsion der gesamten übernehmenden Förderstrecke 10b ausgeschaltet werden und das auf der übernehmenden Förderstrecke 10b aufliegende Stückgut 4 würde aufgrund der ausgeschalteten Elektroadhäsion während des Überführens gar nicht oder zumindest nur suboptimal weiter entlang der Förderrichtung 12b der übernehmenden Förderstrecke 10b transportiert werden. Bei einer geneigten Förderstrecke 10b könnte das Stückgut 4, welches sich auf der übernehmenden Förderstrecke 10b befindet, darüber hinaus an den Rand der Förderstrecke 10b rutschen und dabei seine Ausrichtung verändern, oder sogar von der Förderstrecke 10b fallen. Bei sehr langen Förderstrecken 10 wie der weiteren Förderstrecke 10c ist die Steuereinrichtung 8 adaptiert, das Elektroadhäsionsmittel 6 so anzusteuern, dass Elektroadhäsion nur in demjenigen Fördersegment 110c3 eingeschaltet ist, in dem ein Stückgut 4y auf der Förderstrecke 10c aufliegt, wodurch das Elektroadhäsionsmittel 6 besonders energieeffizient betrieben werden kann. Die Steuereinrichtung 8 ist darüber hinaus adaptiert, die Elektroadhäsion in Abhängigkeit von Gewicht und Oberflächenbeschaffenheit des Stückgutes 4 mit variabler Stärker einzuschalten.

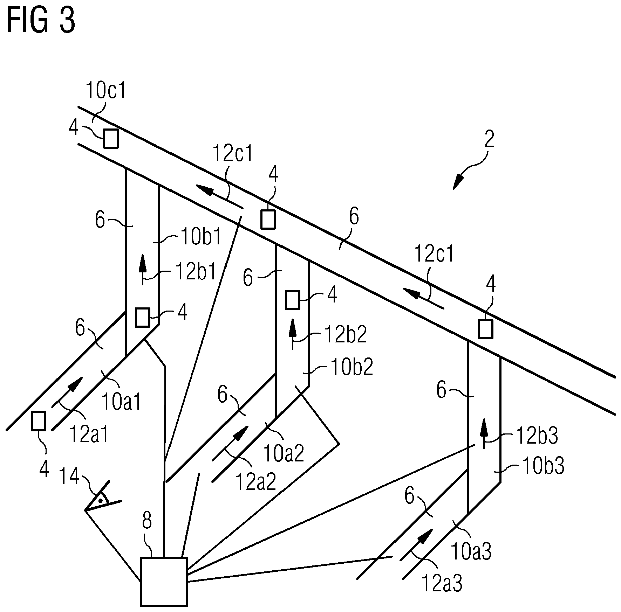

Figur 3 zeigt gemäß einer bevorzugten Ausführungsform der Erfindung eine Aufsicht auf einen weiteren Bereich des Fördersystems 2 von Figur 1 und 2 mit drei übergebenden Förderstrecken 10a1, 10a2, 10a3 die seitwärts in je eine übernehmende Förderstrecke 10b1, 10b2, 10b3 münden und wobei die drei übernehmenden Förderstrecken 10b1, 10b2, 10b3 in der Art eines Crossbelt-Sorters seitwärts in eine gemeinsame weitere Förderstrecke 10c1 münden. Die übernehmenden Förderstrecken 10b agieren und sind gleichartig ausgestaltet wie die übergebenden Förderstrecken 10a. Auf dem Fördersystem 2 aufliegend werden Stückgüter 4 bei im Wesentlichen gleichbleibender Ausrichtung entlang den Förderrichtungen 12a1, 12a2, 12a3, 12b1, 12b2, 12b3, 12c1 der Förderstrecken 10a1, 10a2, 10a3, 10b1, 10b2, 10b3, 10c1 transportiert. Hierzu umfassen alle Förderstrecken 10 ansteuerbare und in die jeweilige Förderrichtung 12 antreibbare Fördermittel. Die übergebenden Förderstrecken 10a und die übernehmenden Förderstrecken 10b sind gleichartig ausgestaltet und umfassen ein mit der Steuereinrichtung 8 ansteuerbares Elektroadhäsionsmittel 6.

Die Steuereinrichtung 8 ist für ein automatisiertes Ansteuern adaptiert. Um ein Stückgut 4 von der übergebenden Förderstrecke 10a auf die übernehmende Förderstrecke 10b zu überführen, steuert die Steuereinrichtung 8 das Fördermittel der übergebenden Förderstrecke 10a so an, dass das Stückgut 4 von dem Fördermittel entlang der Förderrichtung 12a auf die übernehmende Förderstrecke 10b transportiert wird. Eine eingeschaltete Elektroadhäsion der übergebenden Förderstrecke 10a1 stellt eine hohe Haftung zwischen übergebender Förderstrecke 10a und Stückgut 4 sicher. Die Steuereinrichtung 8 steuert das Elektroadhäsionsmittel 6 so an, dass die Elektroadhäsion der übernehmenden Förderstrecke 10b1 ausgeschaltet ist, bevor das Stückgut 4 mit der übernehmenden Förderstrecke 10b1 in Kontakt kommt. Das Stückgut bewegt sich auf der übernehmenden Förderstrecke 10b zunächst im Wesentlichen gleitend unter Beibehaltung seiner Bewegungsrichtung entlang der Förderrichtung 12a der übergebenden Förderstrecke 10a. Der Detektor 14 detektiert und meldet an die Steuereinrichtung 8, sobald das Stückgut 4 mittig auf der übernehmenden Förderstrecke 10b1 aufliegt, woraufhin die Steuereinrichtung 8 automatisiert das Elektroadhäsionsmittel 6 so ansteuert, dass die Elektroadhäsion der übernehmenden Förderstrecke 10b eingeschaltet ist, woraufhin das Stückgut 4 vom Fördermittel der übernehmenden Förderstrecke 10b entlang der Förderrichtung 12b transportiert wird. Das Ein- und Ausschalten der Elektroadhäsion der übernehmenden Förderstrecke 10b ermöglicht, dass diese zugleich als übergebende und übernehmende Förderstrecke 10 agieren kann. Die weitere Überführung von der übernehmenden Förderstrecke 10b auf die weitere Förderstrecke 10c erfolgt gleichartig wie die Überführung von der übergebenden Förderstrecke 10a auf die übernehmende Förderstrecke 10b1. Der Detektor 14 ist adaptiert, zusätzlich zur Position des Stückgutes 4 noch seine Ausrichtung zu detektieren und übermittelt dies an die Steuereinrichtung 8, sobald das Stückgut 4 die übergebende Förderstrecke 10a und/ oder die übernehmende Förderstrecke 10b und/ oder die weitere Förderstrecke 10c verlassen hat und/ oder auf dieser aufliegt. Der Detektor 14 ist beispielsweise eine Lichtschranke, welche am Ende und/ oder Beginn einer Förderstrecke 10 angeordnet ist. Andere Ausführungsformen des Detektors 14 können eine Kamera oder aber auch das menschliche Auge sein.

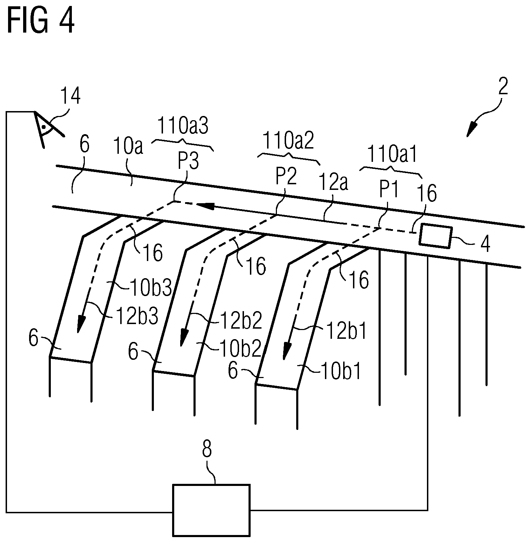

Figur 4 zeigt ein weiteres Fördersystem 2, welches nicht Teil der Erfindung ist, mit quergeneigter übergebender Förderstrecke 10a und drei übernehmenden Förderstrecken 10b1, 10b2, 10b3. Jede der Förderstrecken 10a, 10b1, 10b2, 10b3 weist eigene Förderrichtungen 12a, 12b1, 12b2, 12b3 und eine ähnlich glatte Oberfläche auf, auf denen das Stückgut 4 gleiten kann. Das Fördersystem 2 umfasst ein in die übergebende Förderstrecke 10a integriertes ansteuerbares Elektroadhäsionsmittel 6, eine Steuereinrichtung 8 und einen Detektor 14.

Ein aktiver, angetriebener Transport von Stückgütern 4 mittels eines Fördermittels ist nur auf der übergebenden Förderstrecke 10a möglich, auf den als Transportrutsche ausgestalteten übernehmenden Förderstrecken 10b erfolgt ein Transport mittels Schwerkraftförderung. Vorgesehene und mögliche Transportwege 16 des Stückgutes 4 sind gestrichelt angedeutet. Die Haftung zwischen Stückgut 4 und übergebender Förderstrecke 10a reicht bei ausgeschalteter Elektroadhäsion nicht aus, um das Stückgut 4 mittig auf der Förderstrecke 10a zu halten. Ohne eingeschaltete Elektroadhäsion rutscht das Stückgut 4 durch Schwerkrafteinwirkung an den unteren Rand der Förderstrecke 10a. Dieser Umstand wird für ein Überführen des Stückgutes 4 ohne Veränderung seiner Ausrichtung ausgenutzt. Die Steuereinrichtung 8 ist adaptiert, das Elektroadhäsionsmittel 6 so anzusteuern, dass die Elektroadhäsion der übergebenden Förderstrecke 10a ausgeschaltet wird, um das Stückgut 4 auf die übernehmende Förderstrecke 10b zu übergeben. Zum Überführen wird das Elektroadhäsionsmittel 6 von der Steuereinrichtung 8 so angesteuert, dass die Elektroadhäsion ausgeschaltet wird wenn sich das Stückgut 4 an Position P1 bzw. P2 oder P3 auf der übergebenden Förderstrecke 10a befindet. Ein Ausschalten der Elektroadhäsion der übergebenden Förderstrecke 10a erfolgt also, bevor das Stückgut 4 von der übergebenden Förderstrecke 10a auf die übernehmende Förderstrecke 10b überführt wird. Auf das Stückgut 4 wirkt dann Schwerkraft sowie noch eine Geschwindigkeitskomponente entlang der übergebenden Förderrichtung 12a, so dass das Stückgut 4 auf die übernehmende Förderstrecke 10b gleitet. Da das Stückgut 4 bei ausgeschalteter Elektroadhäsion aufgrund der glatten Oberflächen nahezu ungehindert gleitet, verändert das Stückgut 4 seine Ausrichtung nicht während es sich gleichzeitig auf übergebender Förderstrecke 10a und übernehmender Förderstrecke 10b befindet. Nachdem das Stückgut 4 die übergebende Förderstrecke 10a vollständig verlassen hat, erfolgt eine Meldung vom Detektor 14 an die Steuereinrichtung 8, welche anschließend das Elektroadhäsionsmittel 6 so ansteuert, dass die Elektroadhäsion der übergebenden Förderstrecke 10a wieder eingeschaltet wird.

Um gleichzeitig mehrere Stückgüter 4 auf der übergebenden Förderstrecke zu transportieren, ist die übergebende Förderstrecke 10a in Fördersegmente 110a1, 110a2, 110a3 mit individuell ansteuerbarer Elektroadhäsion unterteilt. So kann die Elektroadhäsion in einem der Fördersegmente 110a2 ein- und ausgeschaltet werden, ohne dass gleichzeitig die Haftung weiterer Stückgüter 4, die sich auf den anderen Fördersegmenten 110a1, 110a3 befinden, beeinflusst wird.

Um die Stückgüter 4 auf den übernehmenden Förderstrecken 10b abzubremsen, umfassen diese ebenfalls ein weiteres integriertes und ansteuerbares Elektroadhäsionsmittel 6, welches die Elektroadhäsion einschaltet, sobald sich das Stückgut 4 an der gewünschten Position befindet. Durch das Abbremsen mittels Einschalten der Elektroadhäsion kann ein besonders kontrollierter Transport erfolgen. Damit das Stückgut 4 seine Ausrichtung nicht verändert, ist die Steuereinrichtung 8 adaptiert, das Elektroadhäsionsmittel so anzusteuern, dass die Elektroadhäsion der übernehmenden Förderstrecke 10b ausgeschaltet ist, während das Stückgut von der übergebenden Förderstrecke 10a auf die übernehmende Förderstrecke 10b überführt wird.

Die übernehmenden Förderstrecken 10b können darüber hinaus ein ansteuerbares Fördermittel umfassen oder in eine weitere Förderstrecke 10 münden.

Die Steuereinrichtung 8 ist adaptiert, das Überführen und Transportieren eines Stückgutes 4 automatisiert durchzuführen.

Bei allen oben erwähnten Ausführungsformen ist es stets so, dass während sich das Stückgut 4 beim Überführen gleichzeitig auf zwei Förderstrecken 10a, 10b befindet, zumindest eine der Förderstrecken 10a, 10b eine ausgeschaltete Elektroadhäsion aufweist. Darüber hinaus wird die Elektroadhäsion von mindestens einer der Förderstrecken im Zusammenhang mit dem Überführen ein- oder ausgeschaltet.

### Bezugszeichenliste

- 2: Fördersystem
- 4: Stückgut
- 6: Elektroadhäsionsmittel
- 8: Steuereinrichtung
- 10: Förderstrecke
- 12: Förderrichtung
- 14: Detektor
- 16: Transportweg
- 110: Fördersegment
- P: Position des Stückguts 4 auf der übergebenden Förderstrecke 10a

## Patentansprüche

1. Fördersystem (2) für ein Stückgut, umfassend eine Steuereinrichtung, eine übergebende Förderstrecke (10a) und eine übernehmende Förderstrecke (10b); wobei
a) die übergebende Förderstrecke (10a) seitwärts in die übernehmende Förderstrecke (10b) mündet;
b) das Stückgut (4) auf der übergebenden Förderstrecke (10a) und auf der übernehmenden Förderstrecke (10b) transportierbar ist;
c) das Fördersystem (2) ausgestaltet ist, das Stückgut (4) von der übergebenden Förderstrecke (10a) auf die übernehmende Förderstrecke (10b) zu überführen; und
d) ein Detektor (14) eingerichtet ist, eine Position des Stückguts (4) an die Steuereinrichtung (8) zu übermitteln, **dadurch gekennzeichnet, dass**
e) das Fördersystem (2) für ein Stückgut ein ansteuerbares Elektroadhäsionsmittel (6) umfasst, und
f) das Elektroadhäsionsmittel (6) ausgestaltet ist, Elektroadhäsion zwischen dem Stückgut (4) und der übernehmenden Förderstrecke (10b) und/ oder der übergebenden Förderstrecke (10a) zu erzeugen; und
g) die Steuereinrichtung (8) adaptiert ist, das Elektroadhäsionsmittel (6) so anzusteuern, dass das Stückgut (4) von der übergebenden Förderstrecke (10a) auf die übernehmende Förderstrecke (10b) im Wesentlichen ohne Veränderung seiner Ausrichtung überführt wird.

2. Fördersystem (2) nach Anspruch 1, **dadurch gekennzeichnet, dass**
die übergebende Förderstrecke (10) und die übernehmende Förderstrecke (10) so angeordnet sind, dass das Stückgut (4) stetig und/ oder gleitend von der übergebenden Förderstrecke (10a) auf die übernehmende Förderstrecke (10b) überführbar ist.

3. Fördersystem (2) nach Anspruch 1 oder 2, **dadurch gekennzeichnet, dass**
die Steuereinrichtung (8) adaptiert ist, das Elektroadhäsionsmittel (6) so anzusteuern, dass die Elektroadhäsion der übernehmenden Förderstrecke (10b) ausgeschaltet ist, während das Stückgut (4) von der übergebenden Förderstrecke (10a) auf die übernehmende Förderstrecke (10b) überführt wird.

4. Fördersystem (2) nach einem der Ansprüche 1 bis 3, **dadurch gekennzeichnet, dass**
die Steuereinrichtung (8) adaptiert ist, das Elektroadhäsionsmittel (6) so anzusteuern, dass die Elektroadhäsion der übernehmenden Förderstrecke (10b) eingeschaltet wird, nachdem das Stückgut (4) hinreichend und/ oder vollständig auf die übernehmende Förderstrecke (10b) überführt wurde.

5. Fördersystem (2) nach einem der Ansprüche 1 bis 4, **dadurch gekennzeichnet, dass**
die Steuereinrichtung (8) adaptiert ist, das Elektroadhäsionsmittel (6) so anzusteuern, dass die Elektroadhäsion der übergebenden Förderstrecke (10a) ausgeschaltet wird, um das Stückgut (4) auf die übernehmende Förderstrecke (10b) zu übergeben.

6. Fördersystem (2) nach einem der Ansprüche 1 bis 5, **dadurch gekennzeichnet, dass**
die übergebende Förderstrecke (10a) und/ oder die übernehmende Förderstrecke (10b) in mehrere Fördersegmente (110a, 110b) unterteilt ist und dass die Steuereinrichtung (8) adaptiert ist, das Elektroadhäsionsmittel (6) so anzusteuern, dass die Elektroadhäsion einzelner Fördersegmente (110a, 110b) individuell an- und ausgeschaltet wird.

7. Fördersystem (2) nach einem der Ansprüche 1 bis 6, **gekennzeichnet durch**
mindestens ein Fördermittel, beispielsweise ein Förderband, auf dem das Stückgut (4) aufliegend transportierbar ist.

8. Verfahren zum Überführen von einem Stückgut (4) von einer übergebenden Förderstrecke (10a) auf eine übernehmende Förderstrecke (10b) eines Fördersystems (2), wobei die übergebende Förderstrecke (10a) seitwärts in die übernehmende Förderstrecke (10b) mündet und das Fördersystem (2) ein ansteuerbares Elektroadhäsionsmittel (6) umfasst, welches ausgestaltet ist, Elektroadhäsion zwischen dem Stückgut (4) und der übernehmenden Förderstrecke (10b) und/ oder der übergebenden Förderstrecke (10a) zu erzeugen; umfassend die Verfahrensschritte:
a) das Stückgut (4) wird auf der übergebenden Förderstrecke (10a) transportiert;
b) das Stückgut (4) wird von der übergebenden Förderstrecke (10a) auf die übernehmende Förderstrecke (10b) überführt; und
c) das Elektroadhäsionsmittel (6) wird basierend auf einer detektierten Position des Stückgutes auf dem Fördersystem so angesteuert, dass das Stückgut (4) von der übergebenden Förderstrecke (10a) auf die übernehmende Förderstrecke (10b) im Wesentlichen ohne Veränderung seiner Ausrichtung überführt wird.

9. Verfahren nach Anspruch 8, **dadurch gekennzeichnet, dass** das Elektroadhäsionsmittel (6) so angesteuert wird, dass die Elektroadhäsion der übernehmenden Förderstrecke (10b) ausgeschaltet ist, bevor und/ oder während das Stückgut (4) von der übergebenden Förderstrecke (10a) auf die übernehmende Förderstrecke (10b) überführt wird.

10. Verfahren nach Anspruch 8 oder 9, **dadurch gekennzeichnet, dass**
das Elektroadhäsionsmittel (6) so angesteuert wird, dass die Elektroadhäsion der übernehmenden Förderstrecke (10b) eingeschaltet wird, nachdem das Stückgut (4) hinreichend und/ oder vollständig auf die übernehmende Förderstrecke (10b) überführt wurde.

11. Verfahren nach einem der Ansprüche 8 bis 10, **gekennzeichnet durch** den Verfahrensschritt
eines Ausschaltens der Elektroadhäsion der übergebenden Förderstrecke (10a), bevor das Stückgut (4) von der übergebenden Förderstrecke (10a) auf die übernehmende Förderstrecke (10b) überführt wird.

12. Verfahren nach einem der Ansprüche 8 bis 11, **dadurch gekennzeichnet dass**
die übergebende Förderstrecke (10a) und/ oder die übernehmende Förderstrecke (10b) in mehrere Fördersegmente (110a, 110b) unterteilt ist und die Elektroadhäsion einzelner Fördersegmente (110a, 110b) individuell ein- und ausgeschaltet wird.

## Claims

1. Conveyor system (2) for individually packaged items, comprising a control device, a transferring conveyor line (10a) and a receiving conveyor line (10b); wherein
a) the transferring conveyor line (10a) opens sideways into the receiving conveyor line (10b);
b) the individually packaged item (4) can be transported on the transferring conveyor line (10a) and on the receiving conveyor line (10b);
c) the conveyor system (2) is designed to transfer the individually packaged item (4) from the transferring conveyor line (10a) to the receiving conveyor line (10b);
d) a detector (14) is designed to transmit a position of the individually packaged item (4) to the control device (8), **characterised in that**
e) the conveyor system (2) for an individually packaged item comprises a controllable electro-adhesion means (6), and
f) the electro-adhesion means (6) is designed to generate electro-adhesion between the individually packaged item (4) and the receiving conveyor line (10b) and/or the transferring conveyor line (10a); and
g) the control device (8) is adapted to control the electro-adhesion means (6) such that the individually packaged item (4) is transferred from the transferring conveyor line (10a) to the receiving conveyor line (10b) substantially without changing its orientation.

2. Conveyor system (2) according to claim 1, **characterised in that**
the transferring conveyor line (10) and the receiving conveyor line (10) are arranged such that the individually packaged item (4) can be transferred in a steady and/or sliding manner from the transferring conveyor line (10a) to the receiving conveyor line (10b).

3. Conveyor system (2) according to claim 1 or 2,
**characterised in that**
the control device (8) is adapted to control the electro-adhesion means (6) such that the electro-adhesion of the receiving conveyor line (10b) is deactivated while the individually packaged item (4) is transferred from the transferring conveyor line (10a) to the receiving conveyor line (10b).

4. Conveyor system (2) according to one of claims 1 to 3,
**characterised in that**
the control device (8) is adapted to control the electro-adhesion means (6) such that the electro-adhesion of the receiving conveyor line (10b) is activated after the individually packaged item (4) has been sufficiently and/or completely transferred to the receiving conveyor line (10b).

5. Conveyor system (2) according to one of claims 1 to 4,
**characterised in that**
the control device (8) is adapted to control the electro-adhesion means (6) such that the electro-adhesion of the transferring conveyor line (10a) is deactivated in order to transfer the individually packaged item (4) to the receiving conveyor line (10b).

6. Conveyor system (2) according to one of claims 1 to 5,
**characterised in that**
the transferring conveyor line (10a) and/or the receiving conveyor line (10b) is divided into a plurality of conveyor segments (110a, 110b) and the control device (8) is adapted to control the electro-adhesion means (6) such that the electro-adhesion of individual conveyor segments (110a, 110b) is activated and deactivated individually.

7. Conveyor system (2) according to one of claims 1 to 6,
**characterised by** at least one conveying means, for example a conveyor belt, on which the individually packaged item (4) can be transported while lying thereon.

8. Method for transferring an individually packaged item (4) from a transferring conveyor line (10a) to a receiving conveyor line (10b) of a conveyor system (2), wherein the transferring conveyor line (10a) opens sideways into the receiving conveyor line (10b) and the conveyor system (2) comprises a controllable electro-adhesion means (6) which is designed to generate electro-adhesion between the individually packaged item (4) and the receiving conveyor line (10b) and/or the transferring conveyor line (10a); comprising the method steps:
a) the individually packaged item (4) is transported on the transferring conveyor line (10a);
b) the individually packaged item (4) is transferred from the transferring conveyor line (10a) to the receiving conveyor line (10b); and
c) the electro-adhesion means (6) is controlled on the basis of a detected position of the individually packaged item on the conveyor system such that the individually packaged item (4) is transferred from the transferring conveyor line (10a) to the receiving conveyor line (10b) substantially without changing its orientation.

9. Method according to claim 8, **characterised in that** the electro-adhesion means (6) is controlled such that the electro-adhesion of the receiving conveyor line (10b) is deactivated, before and/or while the individually packaged item (4) is transferred from the transferring conveyor line (10a) to the receiving conveyor line (10b).

10. Method according to claim 8 or 9, **characterised in that** the electro-adhesion means (6) is controlled such that the electro-adhesion of the receiving conveyor line (10b) is activated after the individually packaged item (4) has been transferred sufficiently and/or completely to the receiving conveyor line (10b).

11. Method according to one of claims 8 to 10, **characterised by** the method step of
deactivating the electro-adhesion of the transferring conveyor line (10a) before the individually packaged item (4) is transferred from the transferring conveyor line (10a) to the receiving conveyor line (10b).

12. Method according to one of claims 8 to 11, **characterised in that**
the transferring conveyor line (10a) and/or the receiving conveyor line (10b) is divided into a plurality of conveyor segments (110a, 110b) and the electro-adhesion of individual conveyor segments (110a, 110b) is activated and deactivated individually.

## Revendications

1. Système de transport (2) pour une pièce de marchandise, comprenant un dispositif de commande, un convoyeur de transfert (10a) et un convoyeur de prise en charge (10b),
a) le convoyeur de transfert (10a) débouchant latéralement sur le convoyeur de prise en charge (10b),
b) la pièce de marchandise (4) pouvant être transportée sur le convoyeur de transfert (10a) et sur le convoyeur de prise en charge (10b),
c) le système de transport (2) étant conçu pour faire passer la pièce de marchandise (4) du convoyeur de transfert (10a) au convoyeur de prise en charge (10b) et
d) un détecteur (14) étant configuré pour transmettre une position de la pièce de marchandise (4) au dispositif de commande (8), **caractérisé en ce que**
e) le système de transport (2) d'une pièce de marchandise comprend un moyen d'adhérence électrique commandable (6) et
f) le moyen d'adhérence électrique (6) est conçu pour créer une adhérence électrique entre la pièce de marchandise (4) et le convoyeur de prise en charge (10b) et/ou le convoyeur de transfert (10a) et
g) le dispositif de commande (8) est adapté pour commander le moyen d'adhérence électrique (6) de telle sorte que la pièce de marchandise (4) est transférée du convoyeur de transfert (10a) au convoyeur de prise en charge (10b) sensiblement sans modification de son orientation.

2. Système de transport (2) selon la revendication 1, **caractérisé en ce que** le convoyeur de transfert (10) et le convoyeur de prise en charge (10) sont agencés de telle sorte que la pièce de marchandise (4) peut être transférée en continu et/ou en glissant du convoyeur de transfert (10a) au convoyeur de prise en charge (10b).

3. Système de transport (2) selon la revendication 1 ou 2, **caractérisé en ce que** le dispositif de commande (8) est adapté pour commander le moyen d'adhérence électrique (6) de manière telle que l'adhérence électrique du convoyeur de prise en charge (10b) est coupée pendant que la pièce de marchandise (4) est transférée du convoyeur de transfert (10a) au convoyeur de prise en charge (10b).

4. Système de transport (2) selon l'une des revendications 1 à 3, **caractérisé en ce que** le dispositif de commande (8) est adapté pour commander le moyen d'adhérence électrique (6) de manière telle que l'adhérence électrique du convoyeur de prise en charge (10b) est enclenchée après que la pièce de marchandise (4) a été suffisamment et/ou entièrement transférée au convoyeur de prise en charge (10b).

5. Système de transport (2) selon l'une des revendications 1 à 4, **caractérisé en ce que** le dispositif de commande (8) est adapté pour commander le moyen d'adhérence électrique (6) de manière telle que l'adhérence électrique du convoyeur de transfert (10a) est coupée pour transférer la pièce de marchandise (4) au convoyeur de prise en charge (10b).

6. Système de transport (2) selon l'une des revendications 1 à 5, **caractérisé en ce que** le convoyeur de transfert (10a) et/ou le convoyeur de prise en charge (10b) sont subdivisés en plusieurs segments convoyeurs (110a, 110b) et **en ce que** le dispositif de commande (8) est adapté pour commander le moyen d'adhérence électrique (6) de manière telle que l'adhérence électrique de segments convoyeurs individuels (110a, 110b) est enclenchée et coupée individuellement.

7. Système de transport (2) selon l'une des revendications 1 à 6, **caractérisé par** au moins un moyen de transport, par exemple une bande convoyeuse, sur lequel la pièce de marchandise (4) peut être transportée en étant posée dessus.

8. Procédé pour transférer une pièce de marchandise (4) d'un convoyeur de transfert (10a) à un convoyeur de prise en charge (10b) d'un système de transport (2), le convoyeur de transfert (10a) débouchant latéralement sur le convoyeur de prise en charge (10b) et le système de transport (2) comprenant un moyen d'adhérence électrique commandable (6) qui est conçu pour créer une adhérence électrique entre la pièce de marchandise (4) et le convoyeur de prise en charge (10b) et/ou le convoyeur de transfert (10a), comprenant les étapes suivantes :
a) la pièce de marchandise (4) est transportée sur le convoyeur de transfert (10a) ;
b) la pièce de marchandise (4) est transférée du convoyeur de transfert (10a) au convoyeur de prise en charge (10b) et
c) le moyen d'adhérence électrique (6) est, sur la base d'une position détectée de la pièce de marchandise, commandée de manière telle sur le système de transport que la pièce de marchandise (4) est transférée du convoyeur de transfert (10a) au convoyeur de prise en charge (10b) sensiblement sans modification de son orientation.

9. Procédé selon la revendication 8, **caractérisé en ce que** le moyen d'adhérence électrique (6) est commandé de manière telle que l'adhérence électrique du convoyeur de prise en charge (10b) est coupée avant et/ou pendant le transfert de la pièce de marchandise (4) du convoyeur de transfert (10a) au convoyeur de prise en charge (10b).

10. Procédé selon la revendication 8 ou 9, **caractérisé en ce que** le moyen d'adhérence électrique (6) est commandé de manière telle que l'adhérence électrique du convoyeur de prise en charge (10b) est enclenchée après que la pièce de marchandise (4) a été suffisamment et/ou entièrement transférée au convoyeur de prise en charge (10b).

11. Procédé selon l'une des revendications 8 à 10, **caractérisé par** l'étape de coupure de l'adhérence électrique du convoyeur de transfert (10a) avant le transfert de la pièce de marchandise (4) du convoyeur de transfert (10a) au convoyeur de prise en charge (10b).

12. Procédé selon l'une des revendications 8 à 11, **caractérisé en ce que** le convoyeur de transfert (10a) et/ou le convoyeur de prise en charge (10b) sont subdivisés en plusieurs segments convoyeurs (110a, 110b) et **en ce que** l'adhérence électrique de segments convoyeurs individuels (110a, 110b) est enclenchée et coupée individuellement.
